# EUROPEAN PATENT SPECIFICATION

(11) **EP 1 605 251 B1**
(45) Date of publication and mention of the grant of the patent: **25.02.2009**
(21) Application number: 05012030.2
(22) Date of filing: 03.06.2005
(51) Int. Cl.: G01N 21/31, G01N 21/35, G01N 21/61

(54) **Gas sensor arrangement with reduced settling time**
Gassensorvorrichtung mit verringerter Einstellzeit
Détecteur de gaz avec un temps de stabilisation réduit

(30) Priority: 09.06.2004 DE 102004028077
(43) Date of publication of application: 14.12.2005
(73) Proprietor: Tyco Electronics Raychem GmbH, 85521 Ottobrunn (DE); Bayerische Motoren Werke Aktiengesellschaft, 80809 München (DE)
(72) Inventor: Minuth, Rudi, 85354 Freising (DE); Fischer, Jörg, 81667 München (DE); Tille, Thomas, Dr., 81673 München (DE)
(74) Representative: Bullwein, Fritz

(56) References cited:
- US-A- 4 101 221
- US-A- 4 954 718
- US-A- 5 291 884
- US-A- 5 936 714

## Description

The present invention relates to a method for measuring the presence and/or the concentration of an analyte by means of a gas sensor arrangement and to a corresponding gas sensor arrangement. The gas sensor arrangement comprises a radiation-emitting radiation source, a gas measuring chamber, which can be filled with a measuring gas which contains at least one analyte to be measured, and at least one radiation detector that detects radiation emitted from the radiation source and produces an output signal depending on the presence and/or the concentration of the analyte.

Such gas sensor arrangements are known for detecting many different analytes, for example, methane or carbon dioxide. Conventional gas sensor arrangements, as are shown, for example, in EP 0 616 207 A2, WO 00/55603 A1 or DE 199 251 96 C2, are based on the characteristic that polyatomic gases absorb radiation, in particular in the infrared wavelength range. This absorption takes place at a wavelength which is characteristic of the relevant gas, for example, for carbon dioxide at 4.24µm. It is therefore possible by means of such gas sensor arrangements to determine the presence of a gas component and/or the concentration of said gas component in a measuring gas. Such gas sensor arrangements comprise a radiation source and an absorption path, i.e., a measuring chamber and a radiation detector. The radiation intensity measured by the radiation detector is, in accordance with the known Beer-Lambert law, a measure of the concentration of the measuring gas. In this connection, as in the case of the so-called NDIR (non-dispersive infrared) sensors, a broadband radiation source can be used and the wavelength concerned can be set via an interference filter or grating. Alternatively, a selective radiation source, for example, a light emitting diode or a laser, can be used in combination with non-wavelength-selective radiation detectors.

Nowadays, the detection of carbon dioxide, in particular, is becoming increasingly important in a large number of applications. For example, the quality of interior air can be monitored, the cleaning cycle of self cleaning ovens can be monitored and the supply of plants with carbon dioxide in greenhouses can be regulated. In the medical field, for example, in anesthetics, the breathing air of a patient can be monitored and, finally, anywhere where there is the risk of carbon dioxide leaking, for example in air conditioning systems, a carbon dioxide sensor can be used in a warning system.

In the automotive field, carbon dioxide detection can be used for monitoring the carbon dioxide content of the interior air to increase the energy efficiency for heating and air conditioning by providing a fresh air supply via a corresponding ventilation flap control, only when required, i.e., where there is a raised carbon dioxide concentration. Furthermore, modern automotive air conditioning systems are based on carbon dioxide as a cooling means, so that carbon dioxide gas sensors can also fulfil a monitoring function in the automotive field with regard to escaping carbon dioxide, where there might be possible defects. In the automotive field, in particular, such gas sensor arrangements have to satisfy the highest requirements for robustness, reliability and miniaturization.

As shown, for example, in the European patent application EP 0 616 207 A2, the radiation source of known gas sensor arrangements is frequently not operated uniformly but pulsed with a specific frequency. A constant frequency and a specific pulse duty factor are normally selected. The pulse duty factor identifies the ratio of operating time (pulse width) to periodic time. Interference can be reduced due to a narrow band filter being used during the signal processing in the detector region and of which the filter frequency corresponds to the pulse frequency with which the radiation source is pulsed.

The known gas sensor arrangements in which the radiation source is pulsed have a crucial disadvantage when the system is switched on, as is also the case with the operating modes, where the radiation source emits no light for a relatively long period. Because only a relatively small amount of energy is radiated per pulse, the settling time, i.e., the period until usable measurement results are available, is relatively long. Thus, for example, with a pulse-operated gas sensor on an infrared basis, the thermal settling time of the system has to be for such a long period that the first 10 to 15 measurement values are not usable. This is problematic, in particular, with regard to safety applications, in particular, in cases where the system has to be more frequently switched on and off.

Furthermore, with gas sensor arrangements, it is known to compensate for the effect of aging of the radiation source. The gas sensor arrangement additionally comprises a reference radiation source in addition to a measuring radiation source, which is switched on periodically to monitor the aging state of the measuring radiation source (see, for example, the German patent specification DE 199 25 196 C2). The reference radiation source is not used here for normal measurement, but it is operated at large monitoring intervals to detect the aging of the measuring radiation source. This operation of the reference radiation source at large intervals and of only short duration is necessary so that the aging of the reference radiation source can be disregarded.

Therefore, with this arrangement, the problem arises that the actual referencing lasts a relatively long time as, after being switched off, the radiation sources require too long a time before they are again in the settled state, i.e., in thermal equilibrium and deliver usable measurement results.

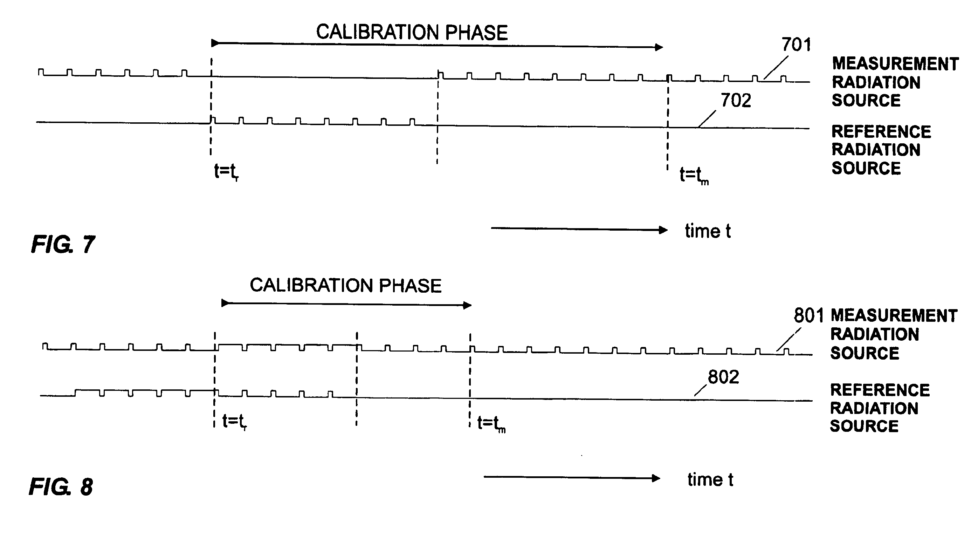

As can be seen in Figure 7, by continuously controlling the measuring radiation source in known gas sensor arrangements, the signal is measured and the reference radiation source is used for referencing and is only switched on during the referencing phase. In principle, during the referencing phase, no regular measurement can be carried out and, for example, a considerable amount of gas could escape unnoticed through a gas leak. Thus, people could be endangered if a gas leak occurs during the referencing period.

Due to the required settling time, however, the first measurement values of the referencing phase shown in Figure 7 are unusable, both after switching on the reference radiation source and after switching on again the measuring radiation source, so that in total, for example, 16 measuring cycles are required for a complete calibration. If it is assumed that a measuring cycle lasts, for example, three seconds, a total of 48 seconds are required for the referencing, during which no measurement data which can be utilized in a warning system is available.

US patent 5,291,884 relates to a device for measuring blood parameters, in particular for measuring the so called hematocrit (Hct). This blood parameter measuring device measures light, which has been back scattered by blood passing through a transparent flow-through housing. In order to ensure that the intensity of the light at the detector remains substantially constant over a range of values of the blood parameters being measured, this document proposes to adjust the intensity of the light emitted by the light sources. To this end a reference detector is provided which receives some of the light from the sources which is reflected from a cover of the flow-through cell and provides a reference detector signal to a signal correction network. This signal correction network generates a driving signal for the light sources in response to the feedback signal.

US patent 4,101,221 discloses a process for the photo-optical measurement of the absorption behavior of solid, liquid or gaseous media. The analysis medium and a comparison medium are exposed to two light beams. The light beams are broken up by chopper means, in particular a rotating disc, having openings which determine by their rotational movement the amount of light present in the analysis medium and comparison medium. The light pulses are divided by defined variation of their intensity into two different pulse series of which one series comprises measuring light pulses and the other series comprises control pulses. The evaluation of the measuring light pulses is periodically interrupted by the control pulses for a relatively short time period and the actual value of the control pulses is compared with a standard value during said time period. The circuit is adjusted during the time period in accordance with the difference between the actual value and the standard value so that this difference is decreased to as small a value as possible, whereupon the following measuring light pulses are again evaluated for the purpose of a measurement.

The problem underlying the present invention is to provide a method for measuring the presence and/or the concentration of an analyte by means of a gas sensor arrangement and to provide a corresponding gas sensor arrangement, which allows for a reduced settling time of the gas sensor arrangement and consequently provides an enhanced reliability of the system. This object is achieved by the subject matter of the independent claims. Advantageous developments of the present invention are the subject of a plurality of sub-claims.

The present invention is based on the idea that the thermal equilibrium of the gas sensor arrangement can be reached more quickly when there is derivation from the pulse sequence pattern of the radiation source, which is optimal for the measuring, at the beginning of a measurement until the gas sensor arrangement is in thermal equilibrium. In this connection, the preheating phase is kept short by the pulses being either widened (i.e., the pulse duty factor is altered in favor of a longer operating time) or by the frequency of the pulses being increased. In any case, during the warm-up phase energy is increasingly delivered to the system via the dissipation of the measuring radiation source, so that the settled state is reached more quickly than if the measuring pulse sequence were delayed until the settled state occurred.

This fundamental idea can also be applied to the case of a gas sensor arrangement in which a measuring radiation source and a reference radiation source are to be compared with one another during a referencing phase. In this application, the reference radiation source can advantageously be preheated with the method according to the invention, before the actual measurement of the reference values is carried out. This offers the advantage that the settled state is reached more quickly and thus the total duration of the referencing phase can be shortened. In safety applications, in particular, this can considerably reduce the period during which the sensor arrangement is not operational.

In this connection, the light pulses emitted by the reference radiation source and which are intended to be used to set the thermal equilibrium, merely have to be emitted during the periods when the measuring radiation source is not transmitting. As a rule, however, this presents no difficulties, as the pulse duty factor of the measuring pulse sequence is generally substantially smaller than one. Thus, for example, the pulse width of the measuring pulse, i.e., the operating time of the radiation source, can be 0.4 seconds and the periodic time 2.5 seconds, which corresponds to a pulse duty factor of 0.16.

The solution according to the invention can be used, in a particularly advantageous manner, for gas sensor arrangements in which the radiation source emits infrared radiation, for example for NDIR (non-dispersive infrared) sensors, as in this case an increase in the power dissipation leads particularly rapidly to the heating of the arrangement.

The advantageous characteristics of the gas sensor arrangement according to the invention can be used, in particular, for the detection of carbon dioxide, for example, in the automotive field, both for monitoring carbon dioxide escaping from leakage points and also for monitoring the air quality in the passenger cabin. Naturally, however, the gas sensor arrangement according to the invention can also be used for the detection of any other gases.

In order, on the one hand, to improve the measuring itself in its energy efficiency and accuracy and in order, on the other hand, to accelerate the setting of the equilibrium by specific heating of the inner wall of the gas measurement chamber, the inner wall of the gas measurement chamber can be configured such that it reflects the radiation emitted by the radiation source. This can either be carried out by the use of radiation reflecting plastic materials or by coating with a metal coating. Preferably, in this case, a gold coating which was deposited by sputtering, vapor coating or by means of electroplating is used.

In order to be able to correct the measurement values with regard to temperature and in order to have an indication for the occurrence of the thermal equilibrium, the gas sensor arrangement can be equipped with a temperature sensor which monitors the temperature of the wall of the gas measurement chamber or the temperature in the vicinity of the radiation source.

Alternatively, or additionally, a timing control can be provided which determines the time at which the warming-up operation is switched to the measuring operation.

The invention will be described hereinafter in more detail with reference to the advantageous embodiments shown in the accompanying drawings. Similar or corresponding details of the subject according to the invention are provided with the same reference numerals. In the drawings:
Figure 1 is a diagrammatic view of a gas sensor arrangement according to a first advantageous embodiment;
Figure 2 is a timing diagram of radiation pulses emitted by a radiation source of Figure 1 according to the prior art;
Figure 3 is a timing diagram of the radiation pulses emitted by the radiation source of Figure 1 according to a first embodiment of the present invention;
Figure 4 is a timing diagram of the radiation pulses emitted by the radiation source of Figure 1 according to a further embodiment of the present invention;
Figure 5 is a diagrammatic view of a controller according to a first advantageous embodiment;
Figure 6 is a diagrammatic view of a gas sensor arrangement according to a second advantageous embodiment;
Figure 7 is a timing diagram of a referencing process in the arrangement according to Figure 6 according to the prior art;
Figure 8 is a timing diagram of the referencing process of the arrangement according to Figure 6 according to a first embodiment of the present invention;
Figure 9 is a diagrammatic view of the controller according to a further advantageous embodiment.

The construction and mode of operation of a gas sensor arrangement 100 according to the invention is described hereinafter in more detail with reference to the Figures.

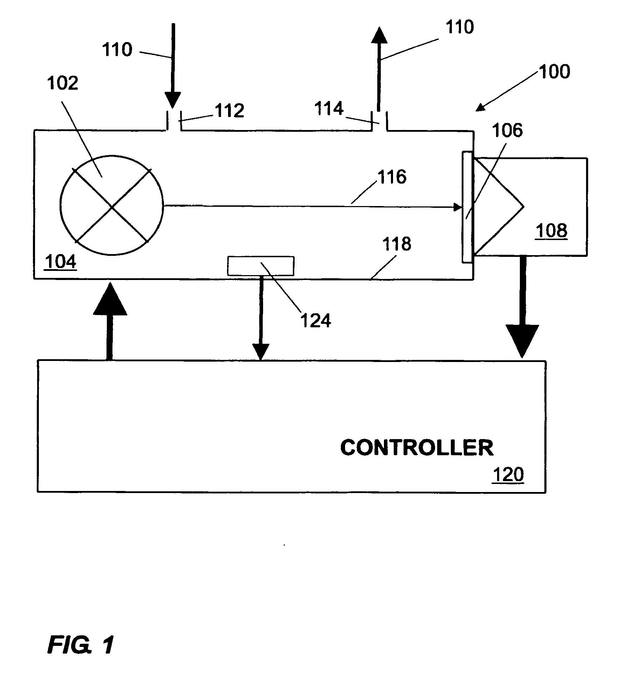

As shown in Figure 1, the gas sensor arrangement 100 according to the invention comprises a radiation-emitting radiation source 102, in this case a broadband infrared radiation source. In principle, the gas sensor arrangement 100 shown is a so-called NDIR (non-dispersive infrared) sensor. The principal components are, in addition to the radiation source 102, a gas measuring chamber 104, an optical wavelength filter 106 and a radiation detector 108, which in this case detects infrared radiation.

A measuring gas 110, which contains at least one analyte, is pumped into the gas measuring chamber 104 or diffused therein, which is symbolized by inlet and outlet 112, 114. The concentration of the measuring gas 110 can be determined electro-optically via the absorption of a specific wavelength in the infrared range. In this connection, infrared radiation 116 emitted from the radiation source 102 is directed to the radiation detector 108 through the gas measuring chamber 104. The radiation detector 108 comprises the optical wavelength filter 106, which only allows through the wavelength range in which the gas molecules to be detected absorb. Other gas molecules generally do not absorb light at this wavelength and therefore do not influence the amount of radiation which reaches the radiation detector 108. Conventionally, the infrared radiation 116 is pulsed by the radiation source 102 in order to be able to filter out thermal background signals from the desired signal. A controller 120 controls the radiation source 102 and receives output signals from the radiation detector 108 and processes said output signals further.

Furthermore, a temperature sensor 124 can be provided to detect the temperature in the gas measuring chamber 104.

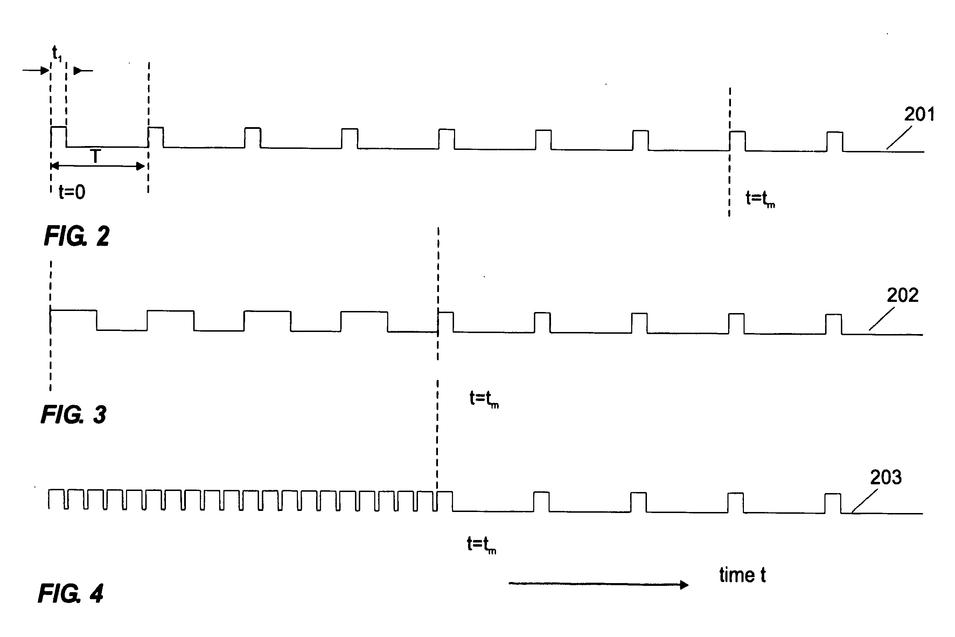

Three waveforms are diagrammatically shown in Figures 2 to 4 for the emitted infrared radiation 116 of the radiation source 102 in Figure 1. In these examples, a bottom level of the base line indicates a switched off state and a top level of the base line indicates a switched on state of the radiation source 102.

Curve 201 shows temporal ratios for operating with a uniform pulse sequence according to the prior art. By way of example, in this drawing a pulse duty factor T1/T of 0.16 is assumed, as might be the case, for example, for a periodic time of T=2.5 seconds and a pulse width of 0.4 seconds.

At the time t=0 the system is now switched on and the measuring radiation source 102 begins to emit pulses according to the curve 201. After the start of the operation, however, the system first has to settle thermally and thus quite a number of measurement values (for example 10 to 15) are not usable, so that the actual measurement can only begin at the time t=tm.

In comparison therewith, curve 202 and curve 203 shown in Figures 3 and 4 show two possible embodiments of the method according to the invention which allow an earlier start for the actual measuring.

As is visible from the curve 202 according to the invention, the duration of the first four pulses can be increased with regard to the off period, so that the pulse duty factor is increased. By these measures, reliable measurement values can be obtained at a substantially earlier time t=tm at which it is switched to the conventional measuring pulse operation.

A further possibility to reach the settled state more quickly, is to leave the pulse width t1 unaltered and, in return, to increase the frequency. This is shown in Figure 4 as the curve 203.

In principle, any pulse duty factors and frequencies can be set in the warming-up operation which occurs before the actual start of the measuring. The settling process is always purposefully influenced, such that its duration is reduced and usable measurement values are available earlier. The specific pulse sequence during the warming-up operation is system-dependent and can be detected empirically.

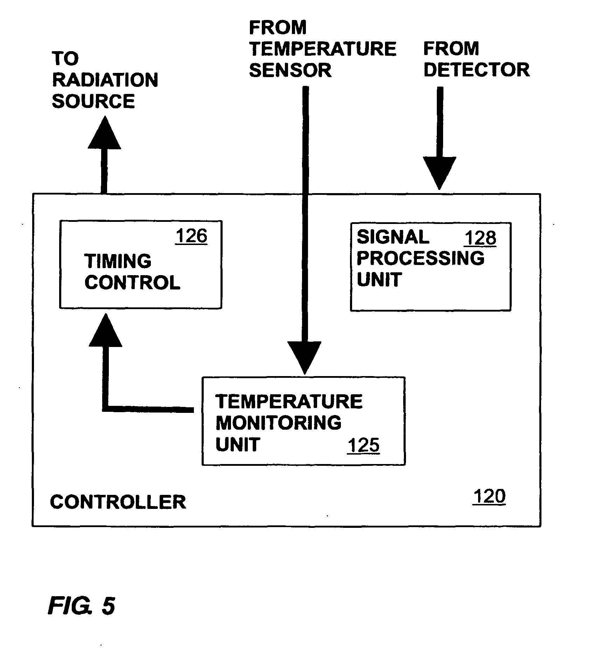

Figure 5 shows diagrammatically the construction of the controller 120 of Figure 1. According to the invention, the controller 120 comprises a timing control 126, which controls the operation of the radiation source 102. A signal processing unit 128 receives the signals delivered by the radiation detector 108 and processes them accordingly. In order, for example, to be able to improve the elimination of background signals, a frequency filter can be provided which is aligned with the pulse frequency during the measurement operation. The signal processing unit 128 can moreover supply signals to warning devices and display devices to show the measurement results. Moreover, a temperature monitoring unit 125 and/or a timer can be provided in order to determine when a warming-up operation is to be switched to a measuring operation, as it can be assumed therefrom that the settled state is reached.

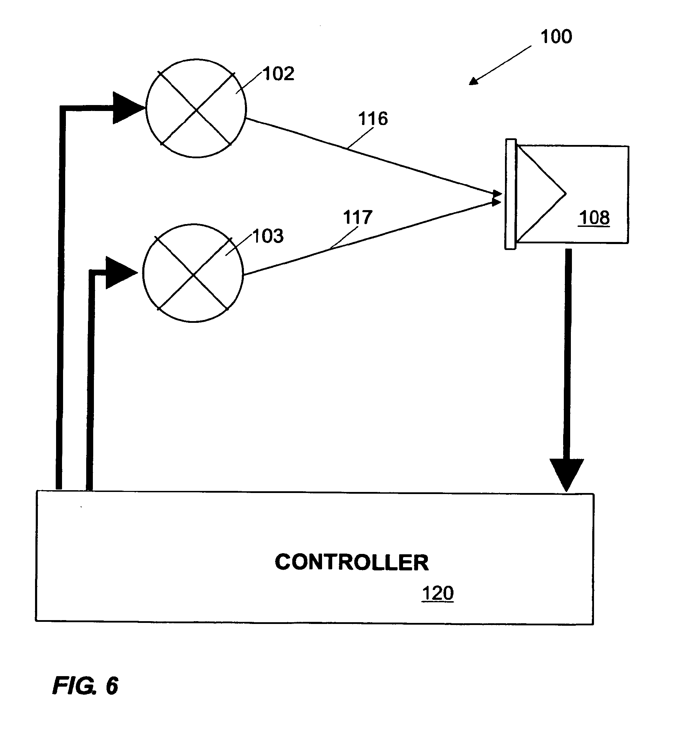

Figure 6 shows a gas sensor arrangement 100 according to a second embodiment. In this embodiment, the gas sensor arrangement 100 comprises a measuring radiation source 102 and a reference radiation source 103. The measuring and reference radiation sources 102, 103 are arranged such that the length of the paths of the infrared radiation 116, 117 from the measuring and reference radiation sources 102, 103 to a detector 108 is the same or that the measuring and reference radiation sources 102, 103 are positioned symmetrically to an axis of symmetry of a gas measuring chamber 104. The reference radiation source 103 is switched on periodically to monitor the aging state of the measuring radiation source 102, and the controller 120 detects the aging of the measuring radiation source 102, on the basis of deviations with respect to the output signals of the detector 108 when the reference radiation source 103 is switched on, compared to when only the measuring radiation source 102 is switched on, and optionally carries out a corresponding correction of the signals.

The timing of the control of the measuring and reference radiation sources 102, 103 according to the invention will now be described with reference to Figures 7 and 8.

Figure 7 shows the normally-used operation with an unaltered pulse sequence, both for the reference radiation source 103 and for the measuring radiation source 102. Curve 701 denotes the emitted light signals of the measuring radiation source 102 and curve 702 the signals of the reference radiation source 103. A referencing phase begins with the control of the reference radiation source 103, so that the reference radiation source 103 emits radiation pulses as shown in the curve 702. As, however, the reference radiation source 103 in principle is only switched on for the referencing, after first being switched on at the time t=tr, it requires a certain time until the thermal equilibrium is established and reliable measurement values are delivered.

In practice, it is to be assumed that approximately four measurement values are unusable as the settled state has not yet occurred. However, for reliable referencing, for example four measurement values are required, the reference radiation source has to remain switched on, in the example shown in Figure 7, for a total of eight pulses. At the time t=tm, the measuring radiation source 102 is again triggered in order to continue the measurement and at the same time to detect the comparative values for the correction. Because the measuring radiation source 102 was switched off during the time in which the reference radiation source 103 was pulsed, there has to be a delay with regard to the measuring radiation source 102 until the settled state is re-established.

Also in the curve 702, when it is assumed that, after switching off the reference radiation source 103, four measuring pulses have to be discarded before a further four measuring pulses can be evaluated for the detection of the required referencing values, the referencing method therefore lasts for 16 cycles with unaltered pulse sequences being emitted. If approximately three seconds are calculated, for example, per measuring cycle, the entire referencing process lasts at least 48 seconds. During this time the measuring system is not operational and can, for example, transmit no warning as to when exactly a gas leak occurs during the referencing phase.

Therefore, as shown by way of example in Figure 8, according to the invention deviations are made from the uniform pulses and, as can be seen from curve 802 in Figure 8, whilst the measuring radiation source 102 still delivers usable measuring pulses, at the times when the measuring radiation source 102 is not transmitting, light pulses are emitted from the reference radiation source 103, which are used to set the thermal equilibrium for the reference radiation source 103.

By suitable signal processing it can be ensured that these light pulses which occur outside the set measuring frequency, do not influence the measuring result. At the time t=tr the reference radiation source 103 is triggered so that it sends light pulses with the measuring pulse frequency and thus usable signals can be measured. As the reference radiation source 103 at the time t=tr is already in the settled state, all measured values can immediately be used and the reference radiation source 103 can, for example, be switched off again after four or five light pulses.

Moreover, according to the invention, as can be seen from curve 801, during the time when the reference radiation source 103 delivers the usable reference radiation pulses, it is possible for the measuring radiation source 102 to be not completely switched off but operated with a pulse sequence which is designed so that measuring radiation pulses are delivered at times when the reference radiation source 103 is not transmitting.

As a result, the measuring radiation source 102 can be prevented from departing from the thermal equilibrium and the first measuring values can again be used after switching off the reference radiation source 103. As a whole, therefore, the referencing can be markedly accelerated.

The curve path of the curves 801, 802 of Figure 8, shows only one embodiment by way of example of the method according to the invention. According to the principle of the present invention, the pulse sequences before the actual recording of measured values can also take place with altered frequencies or narrower or even variable pulse widths. It is only essential that the pulse sequences are coordinated by the measuring radiation source 102 and the reference radiation source 103, such that radiation is always emitted from only one of the two radiation sources 102, 103.

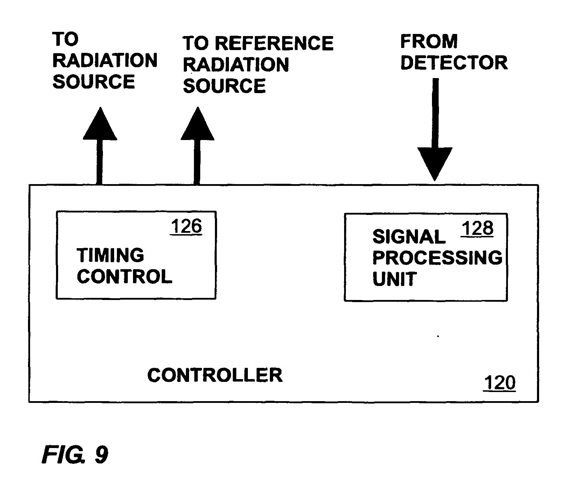

A diagrammatic view of the controller 120 of Figure 6 is shown in Figure 9. As with the controller 120 shown in Figure 5, in this case also a temperature detection unit and/or a timer can be provided in order to establish the time of the respective switching from the warming-up to the measuring operation and vice versa.

By optimised time control of the radiation sources according to the present invention, the thermal equilibrium is more rapidly reached and the amount of unusable measurement data can be reduced and the safety of the operation can be increased.

Naturally, the principles of the present invention are correspondingly adapted and also can be used for any other number of radiation sources and detectors.

## Claims

1. Method for measuring the presence and/or the concentration of an analyte by means of a gas sensor arrangement with a radiation-emitting measuring radiation source (102, 103), a gas measuring chamber (104) which can be filled with a measuring gas (110), which contains at least one analyte to be measured, and at least one radiation detector (108) detecting the radiation and generating an output signal dependent on the presence and/or the concentration of the analyte,
wherein the measuring radiation source (102, 103) emits radiation in the form of pulses, the method being **characterized by** the following steps:
emission of radiation with a first pulse sequence until the gas sensor arrangement is in thermal equilibrium,
emission of radiation with a second pulse sequence to carry out a measurement, the first and second pulse sequence differing in the pulse duty factor and/or the frequency.

2. Method according to claim 1, wherein the measuring radiation source emits infrared radiation.

3. Method according to at least one of the preceding claims, wherein gaseous analytes, preferably carbon dioxide, are detected and/or their concentration is determined.

4. Method according to at least one of the preceding claims, wherein the gas sensor arrangement comprises:
a radiation-emitting measuring radiation source (102) and a radiation-emitting reference radiation source (103), wherein the method comprises the following steps:
operation of the measuring radiation source (102) to emit radiation with a first measuring pulse sequence to carry out the measuring,
while the measuring radiation source (102) emits radiation with the first measuring pulse sequence, operation of the reference radiation (103) source to emit radiation with a first reference pulse sequence to set a thermal equilibrium for the reference radiation source, the first reference pulse sequence and the first measuring pulse sequence being temporally coordinated, such that radiation is always emitted from only one of the radiation sources,
operation of the reference radiation source (103) to emit radiation with a second reference pulse sequence to detect reference measurement values and
while the reference radiation source emits radiation with the second reference pulse sequence, operation of the measuring radiation source (102) to emit radiation with a second measuring pulse sequence to set a thermal equilibrium for the measuring radiation source, the second reference pulse sequence and the second measuring pulse sequence being temporally coordinated, such that radiation is always emitted from only one of the radiation sources.

5. Method according to claim 4, wherein the first and second measuring pulse sequences differ in their pulse duty factor and/or the frequency.

6. Method according to either claim 4 or claim 5, wherein the first and the second reference pulse sequences differ in their pulse duty factor and/or the frequency.

7. Gas sensor arrangement (100) with a radiation-emitting measuring radiation source (102), a gas measuring chamber (104) which can be filled with a measuring gas (110) which contains at least one analyte to be measured, at least one radiation detector (108) detecting the radiation (116) which produces an output signal dependent on the presence and/or the concentration of the analyte and a controller (120) to control the radiation source (102),
**characterized in that** the controller (120) comprises a timing control (126) which can be operated in order to control the measuring radiation source (102) such that during a settling phase it emits radiation with a first pulse sequence until the gas sensor arrangement (100) is in thermal equilibrium and emits radiation during a measuring phase with a second pulse sequence to carry out the measuring,
the first and second pulse sequences differing in the pulse duty factor and/or the frequency.

8. Gas sensor arrangement (100) according to claim 7, wherein the radiation (116) to be detected is infrared radiation and the measuring radiation source (102) is formed by an infrared radiation source, preferably a light emitting diode or a lamp emitting a broadband light spectrum.

9. Gas sensor arrangement (100) according to either claim 7 or claim 8, wherein at least one temperature sensor (124) is provided to monitor the temperature in the gas measuring chamber (104).

10. Gas sensor arrangement (100) according to any one of claims 7 to 9, wherein an inner wall (118) of the gas measuring chamber is configured such that it reflects radiation emitted by the measuring radiation source.

11. Gas sensor arrangement (100) according to claim 10, wherein the inner wall (118) of the gas measuring chamber (104) is provided with a metal coating, preferably a gold coating which was deposited by sputtering, vapor coating or by means of electroplating.

12. Gas sensor arrangement (100) according to any one of claims 7 to 11, wherein it is arranged to detect gaseous analytes, preferably carbon dioxide and/or to determine their concentration.

13. Gas sensor arrangement (100) according to any one of the claims 7 to 12 with a radiation-emitting measuring radiation source (102) and a radiation-emitting reference radiation source (103), wherein the timing control (126) can be operated, in order to control the measuring radiation source (102), such that it emits radiation (116) with a first measuring pulse sequence to carry out the measurement,
in order to control the reference radiation source (103), such that it emits radiation (117) with a first reference pulse sequence to set a thermal equilibrium for the reference radiation source (103), the first reference pulse sequence and the first measuring pulse sequence being temporally coordinated, such that radiation (116, 117) is always emitted from only one of the radiation sources (102, 103),
in order to control the reference radiation source (103), such that it emits radiation with a second reference pulse sequence to detect reference measurement values and
in order to control the measuring radiation source (102), such that it emits radiation with a second measuring pulse sequence, whilst the reference radiation source emits radiation with the second reference pulse sequence, to set a thermal equilibrium for the measuring radiation source (102),
the second reference pulse sequence and the second measuring pulse sequence being temporally coordinated, such that radiation (116, 117) is always emitted from only one of the radiation sources (102, 103).

14. Gas sensor arrangement according to claim 13, wherein the first and the second measuring pulse sequences differ in their pulse duty factor and/or the frequency.

15. Gas sensor arrangement according to either claim 13 or claim 14, wherein the first and the second reference pulse sequences differ in their pulse duty factor and/or the frequency.

## Patentansprüche

1. Verfahren zum Messen der Anwesenheit und/oder der Konzentration eines Analyten mittels einer Gassensoranordnung mit einer Strahlung emittierenden Strahlungsquelle (102, 103), einem Gasmessraum (104), der mit einem Messgas (110), das mindestens einen zu messenden Analyten enthält, befüllbar ist, und mindestens einer die Strahlung detektierenden Detektoreinrichtung (108), die ein von der Anwesenheit und/oder der Konzentration des Analyten abhängiges Ausgangssignal erzeugt, wobei die Strahlungsquelle (102, 103) Strahlung in Form von Pulsen aussendet,
**gekennzeichnet durch** die nachfolgenden Schritte:
Emittieren von Strahlung mit einer ersten Pulsfolge, bis die Gassensoranordnung sich im thermischen Gleichgewicht befindet, Emittieren von Strahlung mit einer zweiten Pulsfolge zum Durchführen der Messung, wobei sich die erste und die zweite Pulsfolge in dem Tastverhältnis und/oder der Frequenz unterscheiden.

2. Verfahren nach Anspruch 1, **dadurch gekennzeichnet, dass** die mindestens eine Strahlungsquelle Infrarotstrahlung aussendet.

3. Verfahren nach mindestens einem der vorangehenden Ansprüche, bei dem gasförmige Analyten, vorzugsweise Kohlendioxid, nachgewiesen werden und/oder deren Konzentration bestimmt wird.

4. Verfahren nach mindestens einem der vorangehenden Ansprüche, bei dem die Gassensoranordnung eine Strahlung emittierende Messstrahlungsquelle (102) sowie eine Strahlung emittierende Referenzstrahlungsquelle (103) enthält und bei dem das Verfahren die nachfolgenden Schritte umfasst:
Betreiben der Messstrahlungsquelle (102) zum Emittieren von Strahlung mit einer ersten Messpulsfolge zum Durchführen der Messung, während die Messstrahlungsquelle (102) Strahlung mit der ersten Messpulsfolge aussendet, Betreiben der Referenzstrahlungsquelle (103) zum Emittieren von Strahlung mit einer ersten Referenzpulsfolge zum Einstellen eines thermischen Gleichgewichts an der Referenzstrahlungsquelle, wobei die erste Referenzpulsfolge und die erste Messpulsfolge zeitlich so koordiniert sind, dass immer nur von einer der Strahlungsquellen Strahlung emittiert wird, Betreiben der Referenzstrahlungsquelle (103) zum Emittieren von Strahlung mit einer zweiten Referenzpulsfolge zum Ermitteln von Referenzmesswerten, und während die Referenzstrahlungsquelle Strahlung mit der zweiten Referenzpulsfolge aussendet, Betreiben der Messstrahlungsquelle (102) zum Emittieren von Strahlung mit einer zweiten Messpulsfolge zum Einstellen eines thermischen Gleichgewichts an der Messstrahlungsquelle, wobei die zweite Referenzpulsfolge und die zweite Messpulsfolge zeitlich so koordiniert sind, dass immer nur von einer der Strahlungsquellen Strahlung emittiert wird.

5. Verfahren nach Anspruch 4, **dadurch gekennzeichnet, dass** sich die erste und die zweite Messpulsfolge in ihrem Tastverhältnis und/oder der Frequenz unterscheiden.

6. Verfahren nach Anspruch 4 oder 5, **dadurch gekennzeichnet, dass** sich die erste und die zweite Referenzpulsfolge in ihrem Tastverhältnis und/oder der Frequenz unterscheiden.

7. Gassensoranordnung (100) mit mindestens einer Strahlung emittierenden Strahlungsquelle (102), einem Gasmessraum (104), der mit einem Messgas (110), das mindestens einen zu messenden Analyten enthält, befüllbar ist, mindestens einer die Strahlung detektierenden Detektoreinrichtung (108), die ein von der Anwesenheit und/oder der Konzentration des Analyten abhängiges Ausgangssignal erzeugt, und einer Steuerung (120) zum Ansteuern der Strahlungsquelle (102), **dadurch gekennzeichnet, dass** die Steuerung (120) eine Zeitsteuerung (126) aufweist, die betrieben werden kann, um die mindestens eine Strahlungsquelle (102) so anzusteuern, dass sie während einer Einschwingphase Strahlung mit einer ersten Pulsfolge emittiert, bis die Gassensoranordnung sich im thermischen Gleichgewicht befindet, und während einer Messphase Strahlung mit einer zweiten Pulsfolge zum Durchführen der Messung emittiert, wobei sich die erste und die zweite Pulsfolge in dem Tastverhältnis und/oder der Frequenz unterscheiden.

8. Gassensoranordnung (100) nach Anspruch 7, bei der die zu detektierende Strahlung (116) Infrarotstrahlung ist und die mindestens eine Strahlungsquelle (102) durch eine Infrarotstrahlungsquelle, vorzugsweise eine lichtemittierende Diode oder eine ein breitbandiges Lichtspektrum emittierende Lampe, gebildet ist.

9. Gassensoranordnung (100) nach Anspruch 7 oder 8, bei der mindestens ein Temperaturfühler (124) zur Überwachung der Temperatur in dem Gasmessraum (104) vorgesehen ist.

10. Gassensoranordnung (100) nach einem der Ansprüche 7 bis 9, bei der die Wandung (118) des Gasmessraums so ausgebildet ist, dass sie die von der Messstrahlungsquelle emittierte Strahlung reflektiert.

11. Gassensoranordnung (100) nach Anspruch 10, bei der die Wandung (118) des Gasmessraums mit einer Metallisierung, vorzugsweise einer Goldschicht, die durch Sputtern, Bedampfen oder mittels Galvanotechnik abgeschieden wurde, versehen ist.

12. Gassensoranordnung (100) nach einem der Ansprüche 7 bis 11, **dadurch gekennzeichnet, dass** sie dazu eingerichtet ist, gasförmige Analyten, vorzugsweise Kohlendioxid, nachzuweisen und/oder deren Konzentration zu bestimmen.

13. Gassensoranordnung (100) nach einem der Ansprüche 7 bis 12 mit einer Strahlung emittierenden Messstrahlungsquelle (102) und einer Strahlung emittierenden Referenzstrahlungsquelle (103), bei der die Zeitsteuerung (126) betrieben werden kann, um die Messstrahlungsquelle (102) so anzusteuern, dass sie Strahlung mit einer ersten Messpulsfolge zum Durchführen der Messung emittiert, um die Referenzstrahlungsquelle (103) so anzusteuern, dass sie Strahlung mit einer ersten Referenzpulsfolge zum Einstellen eines thermischen Gleichgewichts an der Referenzstrahlungsquelle (103) emittiert, wobei die erste Referenzpulsfolge und die erste Messpulsfolge zeitlich so koordiniert sind, dass immer nur von einer der Strahlungsquellen (102, 193) Strahlung (116, 117) emittiert wird, um die Referenzstrahlungsquelle (103) so anzusteuern, dass sie Strahlung mit einer zweiten Referenzpulsfolge zum Ermitteln von Referenzmesswerten emittiert, und um die Messstrahlungsquelle (102) so anzusteuern, dass sie, während die Referenzstrahlungsquelle Strahlung mit der zweiten Referenzpulsfolge aussendet, Strahlung mit einer zweiten Messpulsfolge zum Einstellen eines thermischen Gleichgewichts an der Messstrahlungsquelle (102) emittiert, wobei die zweite Referenzpulsfolge und die zweite Messpulsfolge zeitlich so koordiniert sind, dass immer nur von einer der Strahlungsquellen Strahlung emittiert wird.

14. Gassensoranordnung nach Anspruch 13, **dadurch gekennzeichnet, dass** sich die erste und die zweite Messpulsfolge in ihrem Tastverhältnis und/oder der Frequenz unterscheiden.

15. Gassensoranordnung nach Anspruch 13 oder 14, **dadurch gekennzeichnet, dass** sich die erste und die zweite Referenzpulsfolge in ihrem Tastverhältnis und/oder der Frequenz unterscheiden.

## Revendications

1. Procédé de mesure de la présence et/ou de la concentration d'un analyte à l'aide d'un capteur de gaz comportant une source de radiation pour la mesure de l'émission de radiation (102, 103), une chambre de mesure de gaz (104) qui peut être remplie d'un gaz de mesure (110) contenant au moins un analyte à mesurer et au moins un détecteur de radiation (108) détectant la radiation et générant un signal de sortie en fonction de la présence et/ou de la concentration de l'analyte,
la source de radiation de mesure (102, 103) émettant une radiation sous la forme d'impulsions,
procédé **caractérisé par** les étapes suivantes :
- émission d'une radiation avec une première séquence d'impulsions jusqu'à ce que le capteur de gaz soit à l'équilibre thermique,
- émission d'une radiation avec une seconde séquence d'impulsions pour effectuer une mesure, la première et la seconde séquence d'impulsions étant différentes par le facteur de travail des impulsions et/ou la fréquence.

2. Procédé selon la revendication 1,
**caractérisé en ce que**
la source de radiation de mesure émet un rayonnement infrarouge.

3. Procédé selon les revendications précédentes,
**caractérisé en ce que**
les analytes gazeux notamment du dioxyde de carbone sont détectés et/ou on détermine leur concentration.

4. Procédé selon les revendications précédentes,
**caractérisé en ce que**
le capteur de gaz comprend :
- une source de radiation de mesure (102) émettant une radiation et une source de radiation de référence (103) émettant une radiation,
le procédé comprenant les étapes suivantes :
- mise en oeuvre de la source de radiation de mesure (102) pour émettre la radiation avec une première séquence d'impulsions de mesure pour effectuer la mesure,
- pendant que la source de radiation de mesure (102) émet sa radiation selon une première séquence d'impulsions de mesure, mise en oeuvre de la source de radiation de référence (103) pour émettre une radiation ayant une première séquence d'impulsions de référence pour fixer l'équilibre thermique de la source de radiation de référence, la première séquence d'impulsions de référence et la première séquence d'impulsions de mesure étant coordonnées dans le temps de façon que la radiation soit toujours émise par seulement l'une des sources de radiation,
- mise en oeuvre de la source de radiation de référence (103) pour émettre une radiation avec une seconde séquence d'impulsions de référence pour détecter les valeurs de mesure de référence, et pendant que la source de radiation de référence émet sa radiation selon la seconde source d'impulsions de référence, la source de radiation de mesure (102) est mise en oeuvre pour émettre sa radiation selon une seconde séquence d'impulsions de mesure pour fixer un équilibre thermique pour la source de radiation de mesure, la seconde séquence d'impulsions de référence et la seconde séquence d'impulsions de mesure étant coordonnées dans le temps de façon que la radiation soit toujours émise par seulement l'une des sources de radiation.

5. Procédé selon la revendication 4,
selon lequel
la première et la seconde source d'impulsions de mesure diffèrent l'une de l'autre par le coefficient de travail des impulsions et/ou la fréquence.

6. Procédé selon la revendication 4 ou 5,
selon lequel
la première et la seconde séquence d'impulsions de référence diffèrent l'une de l'autre par le coefficient de travail des impulsions et/ou leur fréquence.

7. Capteur de gaz (100) comportant une source de radiation de mesure (102) émettant une radiation, une chambre de mesure de gaz (104) qui peut être remplie d'un gaz de mesure (110) contenant au moins un analyte à mesurer et au moins un détecteur de radiation (108) qui détecte la radiation (116) produisant un signal de sortie dépendant de la présence et/ou de la concentration de l'analyte ainsi qu'un contrôleur (120) pour contrôler la source de radiation (102),
**caractérisé en ce que**
le contrôleur (120) comporte une commande de temps (126) qui peut être mise en oeuvre pour commander la source de radiation de mesure (102) de façon que pendant une phase de stabilisation, émette une radiation selon une première fréquence d'impulsions jusqu'à ce que le capteur de gaz (100) soit à l'équilibre thermique et qu'elle émette une radiation au cours d'une phase de mesure avec une seconde séquence d'impulsions pour effectuer la mesure,
la première et la seconde séquence d'impulsions étant différentes l'une de l'autre par le coefficient de travail des impulsions et/ou leur fréquence.

8. Capteur de gaz (100) selon la revendication 7,
**caractérisé en ce que**
la radiation (116) à détecter est une radiation infrarouge et la source de radiation de mesure (102) est formée par une source de radiation infrarouge de préférence une diode photoémissive ou une lampe émettant dans un spectre de lumière à bande large.

9. Capteur de gaz (100) selon la revendication 7 ou 8,
**caractérisé en ce qu'**
au moins un capteur de température (124) contrôle la température dans la chambre de mesure de gaz (104).

10. Capteur de gaz (100) selon les revendications 7 à 9,
**caractérisé en ce que**
la paroi intérieure (118) de la chambre de mesure de gaz est configurée pour réfléchir la radiation émise par la source de radiation de mesure.

11. Capteur de gaz (100) selon la revendication 10,
**caractérisé en ce que**
la paroi intérieure (118) de la chambre de mesure de gaz (104) comporte un revêtement métallique de préférence un revêtement d'or déposé par pulvérisation, par dépôt à la vapeur ou par galvanisation.

12. Capteur de gaz (100) selon les revendications 7 à 11,
**caractérisé en ce qu'**
il détecte des analytes gazeux de préférence du dioxyde de carbone et/ou il détermine leur concentration.

13. Capteur de gaz (100) selon les revendications 7 à 12 comportant une source de radiation de mesure (102) émettant une radiation ainsi qu'une source de radiation de référence (103) émettant une radiation, la commande de tension (126) étant mise en oeuvre pour commander la source de radiation de mesure (102) de façon à émettre une radiation (116) selon une première séquence d'impulsions de mesure pour effectuer la mesure et commander la source de radiation de référence (103) de façon qu'elle émette une radiation (117) selon une première séquence d'impulsions de référence pour fixer un équilibre thermique pour la source de radiation de référence (103), la première séquence d'impulsions de référence et la première séquence d'impulsions de mesure étant coordonnée dans le temps de façon que la radiation (116, 117) soit toujours émise seulement par l'une des sources de radiation (102, 103) pour commander la source de radiation de référence (103) pour la radiation qu'elle émet avec une seconde séquence d'impulsion de référence pour détecter les valeurs de mesure de référence, et
pour commander la source de radiation de mesure (102) de façon qu'elle émette une radiation d'une seconde séquence d'impulsions de mesure, pendant que la source de radiation de référence émette une radiation avec une seconde séquence d'impulsions de référence pour fixer l'équilibre thermique de la source de radiation de mesure (102),
la seconde séquence d'impulsions de référence et la seconde séquence d'impulsions de mesure étant coordonnées dans le temps pour que la radiation (116, 117) soit toujours émise par seulement l'une des sources de radiation (102, 103).

14. Capteur de gaz selon la revendication 13,
**caractérisé en ce que**
la première et la seconde séquence d'impulsions de mesure diffèrent par leur coefficient de travail d'impulsion et/ou leur fréquence.

15. Capteur de gaz selon la revendication 13 ou 14,
**caractérisé en ce que**
la première et la seconde séquence d'impulsions de référence diffèrent par leur coefficient de travail d'impulsion et/ou la fréquence.
